# EUROPEAN PATENT APPLICATION

(11) **EP 4 841 341 A1**
(43) Date of publication of application: **18.11.2026**
(21) Application number: 26178155.3
(22) Date of filing: 12.05.2026
(51) Int. Cl.: G02F 1/35, G02F 1/365, G02F 1/21

(54) **TEMPORAL MULTIPLEXING OF ENTANGLED PHOTON PAIR SOURCES**

(30) Priority: 16.05.2025 US 202519210445
(71) Applicant: The Boeing Company, Arlington, VA 22202 (US)
(72) Inventor: MOHAGEG, MAKAN, Arlington, 22202 (US); KIM, DANNY MYUNG KON, Arlington, 22202 (US)
(74) Representative: Bugnion S.p.A. - US1

(57) **Abstract**

In some implementations, an optical system, includes an optical emitter; a set of splitters; and a set of combiners. A splitter is configured to receive an input and split the input into a first part and a second part, wherein the splitter includes a delay component, such that the second part is time-delayed relative to the first part at an output of the splitter. A combiner is configured to receive the output of the splitter and re-combine the first part and the second part with the second part time-delayed relative to the first part, such that an output pulse frequency of the combiner is twice an input pulse frequency of the splitter. In some implementations, the optical system includes a spontaneous parametric down-conversion (SPDC) optic configured to generate a set of quantum entangled photons from the beam.

## Description

### FIELD

The present disclosure relates generally to optical systems and to temporal multiplexing of entangled photon pair sources.

### BACKGROUND

Spontaneous parametric down-conversion (SPDC) is a nonlinear optical process in which a high-energy photon interacts with an optical element and splits into two lower-energy photons, known as signal and idler photons. Types of optical elements that can be used to generate photon pairs may include nonlinear crystals or quantum dots. Generated photon pairs exhibit quantum correlations, often manifesting as entanglement in polarization, momentum, or time-energy degrees of freedom. SPDC may have uses in quantum optics, such as for quantum cryptography, quantum computing, quantum networking, quantum sensing, or quantum communication, among other examples.

### SUMMARY

An embodiment of the present disclosure provides an optical system, comprising: an optical emitter configured to emit a beam with a first pulse frequency; a set of splitters disposed in an optical path of the optical emitter; a set of combiners disposed in the optical path of the optical emitter, wherein a splitter, of the set of splitters, is configured to receive an input, at an input pulse frequency, and split the input into a first part and a second part, wherein the splitter includes a delay component, such that the second part is time-delayed relative to the first part at an output of the splitter; wherein a combiner, of the set of combiners, is configured to receive the output of the splitter and re-combine the first part and the second part with the second part time-delayed relative to the first part, such that an output pulse frequency of the combiner is twice the input pulse frequency of the splitter; and an SPDC optic configured to generate a set of quantum entangled photons from the beam, wherein the beam, at the optic, is associated with a second pulse frequency that is 2*^{N}* times greater than the first pulse frequency, where N represents a quantity of splitters in the set of splitters.

In one example, the set of splitters is arranged linearly, such that each splitter of the set of splitters is associated with a time delay that is half of a time delay of a previous splitter of the set of splitters.

In one example, a sequentially last splitter, of the set of splitters, is associated with a time delay of *T*/2^{N} where T represents a time delay of a sequentially first splitter of the set of splitters.

In one example, the optical system further comprises an amplifier configured to amplify an output of at least one splitter of the set of splitters.

In one example, the amplifier includes an erbium-doped fiber array, EDFA, amplifier.

In one example, the optical system further comprises a frequency conversion component configured to convert the beam from a first wavelength of the beam as an output from at least one splitter of the set of splitters to a second wavelength of the beam as an input to the SPDC optic.

In one example, the optical system further comprises a clock reference output coupled to an output of a sequentially last splitter of the set of splitters.

In one example, the splitter comprises a first splitter input configured to receive the first part, a second splitter input configured to receive the second part, a first splitter output configured to output the first part, a second splitter output configured to output the second part, a first set of optics configured to form a first splitter optical path from the first splitter input to the first splitter output, and a second set of optics configured to form a second splitter optical path from the second splitter input to the second splitter output.

In one example, the first splitter optical path is associated with a first optical path length and the second splitter optical path is associated with a second optical path length, wherein the time-delay of the second part is associated with a difference between the first optical path length and the second optical path length.

In one example, the first set of optics and the second set of optics share at least one optical element.

In one example, the at least one optical element includes at least one of a retro-reflector, a non-polarizing cube beam-combiner, or a two-sided mirror.

In one example, the optical system further comprises at least one optical fiber configured to couple the optical emitter to the SPDC optic via the set of splitters and the set of combiners. In one example, the optical fiber is a dispersion compensating fiber.

Another embodiment of the present disclosure provides a method, comprising: generating, by an optical system, a set of pulses with a first pulse frequency; performing, by the optical system, a set of splittings of pulses of the set of pulses and a set of re-combinings of the set of pulses to form a new set of pulses with a second pulse frequency that is different than the first pulse frequency; generating, by the optical system, a set of quantum entangled photons using the new set of pulses with the second pulse frequency; and outputting, by the optical system, the set of quantum entangled photons.

In one example, performing the set of splittings of the set of pulses and the set of re-combinings of the set of pulses comprises splitting an input set of pulses into a first optical path and a second optical path, wherein the first optical path and the second optical path have different optical path lengths to introduce a delay between pulses on the first optical path and pulses on the second optical path, and re-combining, by the optical system, the first optical path and the second optical path to form a re-combined set of pulses.

In one example, performing the set of splittings of the set of pulses and the set of re-combinings of the set of pulses comprises performing a plurality of splittings and a plurality of re-combinings.

In one example, the first pulse frequency is less than or equal to 100 megahertz and the second pulse frequency is at least 20 gigahertz.

In one example, the optical system includes a set of cascaded linear optics.

Yet a further embodiment of the present disclosure provides an optical system, comprising: a plurality of optical emitters to emit a plurality of sets of optical pulses each with a first pulse frequency; a set of delay components aligned to a subset of the plurality of optical emitters to delay a subset of the plurality of sets of optical pulses; a coupler component to couple the plurality of sets of optical pulses, wherein the set of delay components is configured to cause the plurality of sets of optical pulses to combine with a second pulse frequency; and an SPDC component configured to generate a set of quantum entangled photon pairs using the plurality of sets of optical pulses combined with the second pulse frequency.

In one example, the optical system further comprises a phase locked loop configured to control the plurality of optical emitters.

The features, functions, and advantages described herein can be achieved independently in various implementations or can be combined in other implementations, further details of which are shown in the drawings and described below.

### BRIEF DESCRIPTION OF THE DRAWINGS

Figs. 1A-1B are diagrams of an optical system associated with temporal multiplexing of entangled photon pair sources.
Figs. 2A-2B are diagrams of an optical system associated with temporal multiplexing of entangled photon pair sources.
Fig. 3 is a diagram of an example optical system associated with temporal multiplexing of entangled photon pair sources.
Fig. 4 is a flowchart of an example process associated with temporal multiplexing of entangled photon pair sources.

### DETAILED DESCRIPTION

The following detailed description of example implementations refers to the accompanying drawings. The same reference numbers in different drawings identify the same or similar elements.

Entangled photon sources provide pairs of entangled photons that can be used for quantum cryptography, quantum computing, quantum networking, quantum sensing, or quantum communication, among other examples. For example, an optical system may include non-linear optics, such as non-linear crystals or quantum dots, among other examples, that receive an input beam and output pairs of entangled photons via SPDC. When SPDC occurs, a pair of photons are generated as an output from a single photon that is an input. Accordingly, when an input beam to an SPDC has an input pulse frequency of *f*, the output beam from the SPDC has an output pulse frequency of*f*/*2*.

To accommodate some applications for entangled photons, it is desirable to provide the entangled photons with increasingly high repetition rates (e.g., increasingly high pulse frequencies). For example, quantum network operations may use entangled photons with a repetition rate of up to 100 gigahertz (GHz) or even greater in some cases. A set of multiplexers can be used to reroute single photons to spatially or time multiplex the single photons. However, multiplexers may be associated with relatively high insertion loss levels, which may result in inefficient operation of an optical system. Some techniques for achieving high repetition rates include the combining of multiple outputs from multiple non-linear optics. In other words, some techniques include optical systems that use different emitters and non-linear optics to generate different pairs of entangled photons and then use linear optics to combine the pairs of entangled photons into a single beam with a high repetition rate. However, propagation of pairs of entangled photons through linear optics can degrade a flux or a utility of the pairs of entangled photons. Further, usage of linear optics to combine pairs of entangled photons may result in an optical system that is fragile and lossy, resulting in poor communication efficiency and frequent failure.

Some implementations described herein enable generation of entangled photons with a high repetition rate. For example, an optical system may include linear optics that boost a repetition rate of an emitted optical beam before generation of entangled photon pairs. In this case, the optical system generates entangled photon pairs from the boosted optical beam, thereby achieving a high repetition rate of the entangled photons without subjecting the entangled photons to excessive shaping, steering, or combining using linear optics after generation. In some implementations, the optical system includes cascaded linear optics, such as cascaded splitters and combiners to apply a time delay to portions of an optical beam, thereby increasing a repetition rate of the optical beam before generation of entangled photons. In some implementations, the optical system includes a phase locked loop active feed forward arrangement of optical sources coupled to a set of delay elements and an optical combiner. In this case, the delay elements cause the multiple optical beams to be time multiplexed to increase the repetition rate of a single combined optical beam. In this way, the optical system can achieve a high repetition rate for entangled photons, which can enable utilization in quantum networking, quantum cryptography, quantum computing, quantum sensing, or quantum communication, among other examples. Additionally, or alternatively, techniques described herein may improve a durability, manufacturability, or efficiency of an optical system that is used as a source for entangled photons.

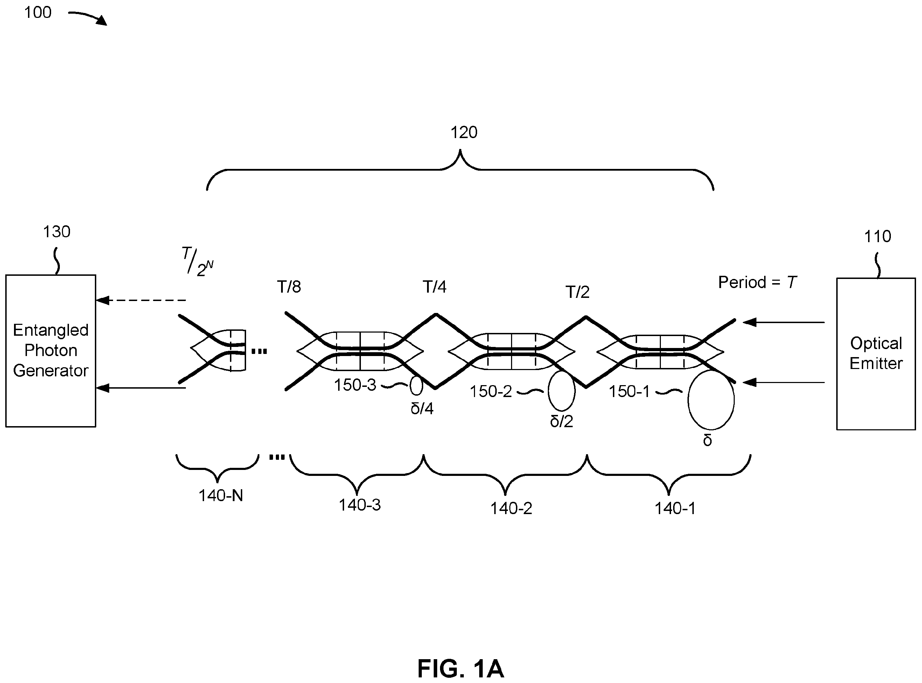

Figs. 1A-1B are diagrams of an optical system 100 associated with temporal multiplexing of entangled photon pair sources. As shown in Fig. 1A, the optical system 100 includes an optical emitter 110, a set of linear optics 120, and an entangled photon generator 130.

The optical emitter 110 may include an optical device, such as a laser emitter, associated with generating a beam. For example, the optical emitter 110 may include a vertical cavity surface emitting laser (VCSEL), an edge emitting laser (EEL), or a laser diode, among other examples. In some implementations, the optical emitter 110 includes a laser emitter associated with outputting photons with a configured pump wavelength and at a particular output rate. As one example, the optical emitter 110 may be a 405 nanometer (nm) laser emitter or a 775 nm laser emitter. As another example, the optical emitter 110 may be configured to emit in a telecommunications band, such as in the O-Band (e.g., approximately 1310 nm) or the C/L bands (e.g., approximately 1530 nm to 1600 nm), among other examples. In some implementations, the optical emitter 110 is configured to output a pulsed laser with a configured repetition period, *T*, and a configured pulse length Δ. The entangled photon generator 130 may receive a beam with a configured repetition period *T*/2*^{N}* from a sequentially last splitter of the set of linear optics 120, as described in more detail herein, and generate entangled photons. For example, the entangled photon generator 130 may include an SPDC optic, such as a non-linear optic or a set of quantum dots. The SPDC optic may be implemented in a photonic integrated circuit (PIC).

The set of linear optics 120 may include a set of cascaded optical splitters and optical combiners. For example, the set of linear optics 120 may include a first optical splitter and optical combiner 140-1 through an *N*^{th} optical splitter and optical combiner 140-*N*. Each optical splitter and optical combiner 140 may receive an optical beam, split the optical beam into two parts, introduce a time delay to one part of the split optical beam, and re-combine the two parts of the optical beam back into a single optical beam. In other words, outputs of a splitter are coupled to inputs of a combiner, such that an optical path is formed from a splitter input to a splitter output to a combiner input to a combiner output. In this case, by re-combining the beam with the optical delay introduced by an optical path length difference between branches (e.g., optical paths) within the set of linear optics 120, the optical splitter and optical combiner 140 can increase a pulse frequency of the optical beam by interleaving pulses from the two parts of the optical beam.

In other words, an optical splitter and optical combiner 140 receives an input beam of a set of two pulses *p₁* and *p₂,* sequentially, and splits the set of pulses into two branches of the optical splitter and optical combiner 140. The first branch includes a first instance of the two pulses *p₁₁* and *p₂₁* and the second branch includes a second instance of the two pulses *p₁₂* and *p₂₂.* The second branch includes a delay component 150, which delays the second instance of the two pulses by a delay amount *δ*. When the first branch and the second branch are re-combined, rather than the two instances of the two pulses being re-combined together as pulses *p₁* and *p₂,* the second instance of the two pulses is delayed relative to the first instance of the two pulses, resulting in an output beam that includes four pulses *p₁₁, p₁₂, p₂₁, p₂₂* in sequence. Accordingly, within the same time interval that the input beam includes pulses *p₁* and *p₂,* the output beam includes four pulses *p₁₁, p₁₂, p₂₁, p₂₂.* In terms of the configured repetition period T, the input beam for an optical splitter and optical combiner 140 has a repetition period of twice the output beam for the optical splitter and the optical combiner 140. In other words, the optical splitter and optical combiner 140 causes the output beam to have a halved repetition period and a doubled pulse frequency relative to the input beam. Accordingly, and as shown in Fig. 1A, the optical splitter and optical combiner 140-1 has an input beam with a period *T*, uses a delay component 150-1 to introduce a delay of *δ* to a split part of the input beam, and has an output beam with a period *T*/2. Similarly, the optical splitter and optical combiner 140-2 has an input beam with a period *T*/*2*, uses a delay component 150-2 to introduce a delay of *δ*/*2* to a split part of the input beam, and has an output beam with a period *T*/4. Similarly, the optical splitter and optical combiner 140-3 has an input beam with a period *T*/*2*, uses a delay component 150-3 to introduce a delay of *δ*/*4* to a split part of the input beam, and has an output beam with a period *T*/8. With a set of *N* optical splitters and optical combiners 140, an output of the *N*^{th} optical splitter and optical combiner 140-*N* is an output beam with a period *T*/2*^{N}* and a pulse frequency of 2*^{N}* times greater than a pulse frequency that is input to the first optical splitter and optical combiner 140-1. Based on having a pulse length of Δ, the quantity of optical splitters and optical combiners 140 that can be included in the set of linear optics 120 is, in some implementations, *N < T*/2Δ (e.g., to prevent interleaved pulses from overlapping with each other). Accordingly, the pulse length Δ that is emitted by the optical emitter 110 may be selected to enable achievement of a desired repetition rate using a particular quantity of optical splitters and optical combiners 140.

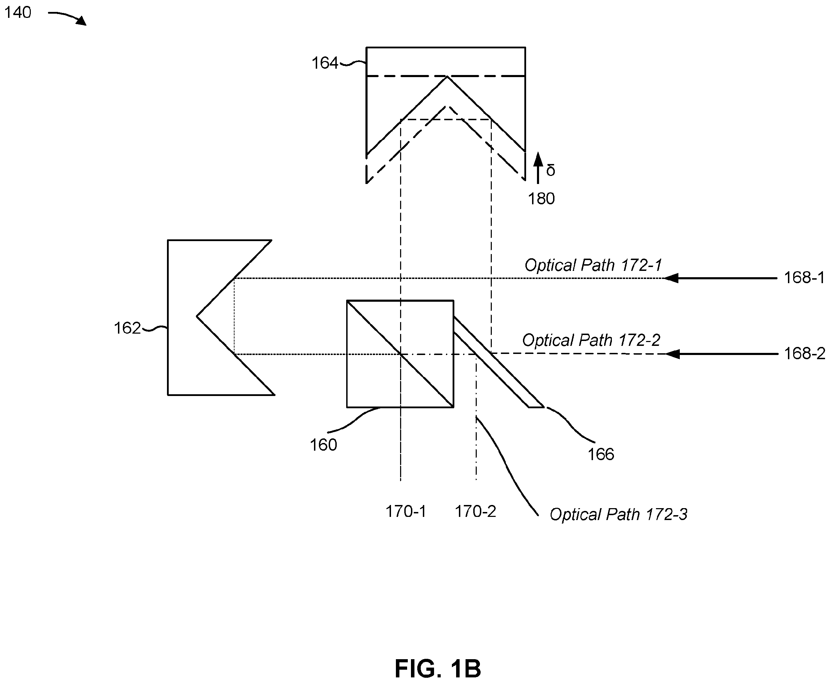

Fig. 1B shows an example architecture of an optical splitter and optical combiner 140. For example, to introduce a delay, using a delay component 150, the optical splitter and optical combiner 140 may include a set of optics, such as a beam-combiner 160, a first retroreflector 162, a second retroreflector 164, and a two-sided mirror 166. In some implementations, the beam-combiner 160 includes a non-polarizing cube optic that is a beamsplitter when beams are incident on the beam-combiner 160 in a first direction and that is a beam-combiner when beams are incident on the beam-combiner 160 in a second direction. In some implementations, rather than a two-sided mirror 166, the optical splitter and optical combiner 140 includes a right-angle mirror. Although the optical splitter and optical combiner 140 are illustrated with a particular set of optics to implement splitting, combining, and/or delay, other sets of optics can be used, such as films, mirrors, lenses, gratings, fibers, or prisms, among other examples. For example, the delay component 150 can include a fiber loop that delays a portion of a beam.

The set of optics couples the inputs 168 to the outputs 170. For example, the first optical path 172-1 extends from the input 168-1 to the first retroreflector 162, the beam-combiner 160, and the first output 170-1. Similarly, the second optical path 172-2 extends from the second input 168-2 to the two-sided mirror 166, the second retroreflector 164, the beam-combiner 160, and the first output 170-1. However, when the beam-combiner 160 combines beam parts from the first optical path 172-1 and the second optical path 172-2, there may be an amount of loss. Accordingly, another optical path 172-3 extends from the beam-combiner 160 to the two-sided mirror 166, and the second output 170-2. The third optical path 172-3 ensures that a beam part, which is loss from the beam-combiner 160, can be re-combined with beam parts from the first optical path 172-1 and the second optical path 172-2. As shown by reference number 180, the second retroreflector 164 is displaced by an amount δ. The displacement results in the second optical path 172-2 being longer than the first optical path 172-1 by an amount that causes beam pulses conveyed on the second optical path 172-2 to be delayed by δ relative to beam pulses conveyed on the first optical path 172-1.

As indicated above, Figs. 1A-1B are provided as an example. Other examples may differ from what is described with regard to Figs. 1A-1B.

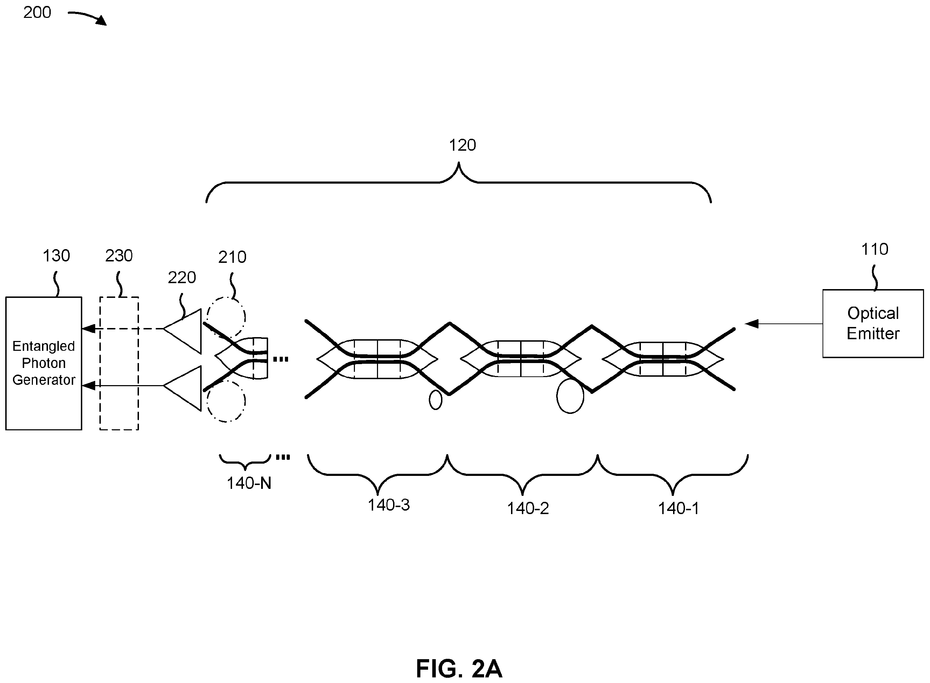

Figs. 2A-2B are diagrams of an optical system 200/200' associated with temporal multiplexing of entangled photon pair sources. As shown in Fig. 2A, the optical system 200 includes an optical emitter 110, a set of linear optics 120, and an entangled photon generator 130. As further shown in Fig. 2A, the optical system 200 may include a compensation component 210, an amplifier 220, and a harmonic generator 230.

The compensation component 210 may include a dispersion compensating fiber or delay line. For example, the compensation component 210 may include a compensating fiber or dispersion compensating waveguide. In this case, when the beam is passed through the linear optics 120 to increase the repetition rate of pulses in the beam, the beam may experience chromatic dispersion, which can be compensated for in an optical fiber that introduces a negative dispersion value to cancel out a positive dispersion introduced by optical fibers of the set of linear optics 120. In this way, the compensation component 210 may prevent signal degradation and enable maintenance of signal integrity over increasing fiber distances of the set of linear optics 120 and/or other optical fibers through which the beam is passed.

The amplifier 220 may include a phase-preserving amplifier that steps up a pulse energy of a beam. For example, the amplifier 220 may include an erbium-doped fiber array (EDFA) amplifier. In this case, an EDFA amplifier may cause amplified spontaneous emission, which can be filtered out of the beam. When the beam is split and re-combined to increase a pulse repetition rate in the set of linear optics 120, a pulse energy of each pulse may be reduced (e.g., proportionately with the increase in pulse repetition rate). Accordingly, the amplifier 220 is used to increase the pulse energy of pulses in the beam, thereby increasing an energy level of entangled photons generated by the entangled photon generator 130. In this way, the amplifier 220 increases a likelihood of photon detection of the entangled photons generated by the entangled photon generator 130.

The harmonic generator 230 may include a second harmonic generator (SHG) or a third harmonic generator (THG), among other examples. For example, the harmonic generator 230 may be associated with adjusting a wavelength of a beam that is provided to the entangled photon generator 130. In this case, the harmonic generator 230 may include a nonlinear crystal that down-converts a beam with a first wavelength to a beam with a second wavelength (e.g., that is half of the first wavelength). In some implementations, the harmonic generator 230 includes a frequency conversion component.

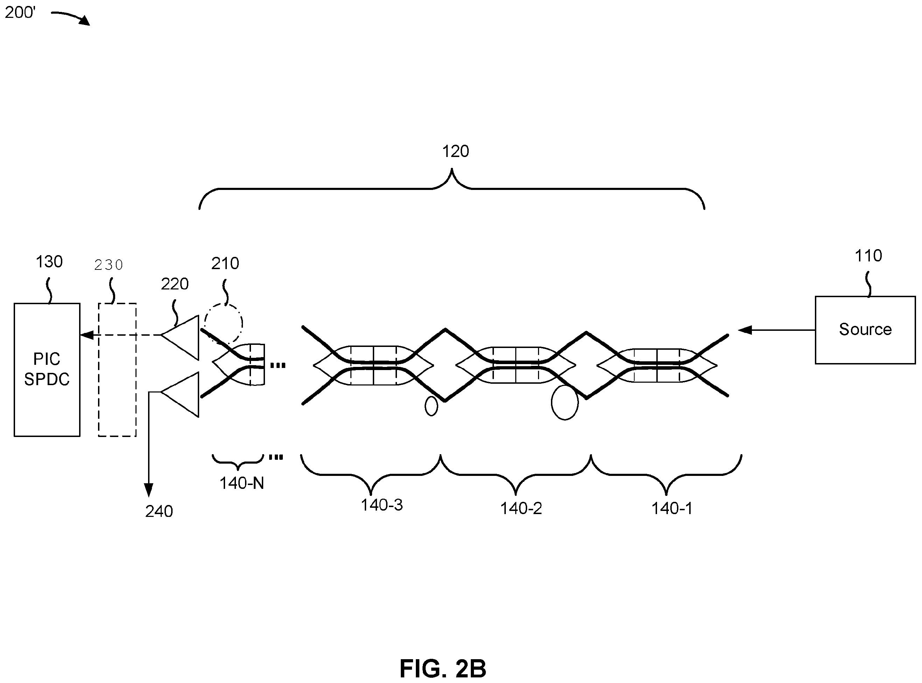

As further shown in Fig. 2B, the optical system 200' may include an output 240. In this case, rather than both outputs of the optical splitter and optical combiner 140-N being directed to the entangled photon generator 130, an output of the optical splitter and optical combiner *140-N* is directed to the output 240 of the optical system 200'. In this case, the output 240 may be used as a clock reference for entangled photons generated by the entangled photon generator 130. In this way, the optical system 200' can compensate for and mitigate issues associated with delay-line drift or timing jitter, which can occur in the set of linear optics 120. As indicated above, Figs. 2A-2B are provided as an example. Other examples may differ from what is described with regard to Figs. 2A-2B.

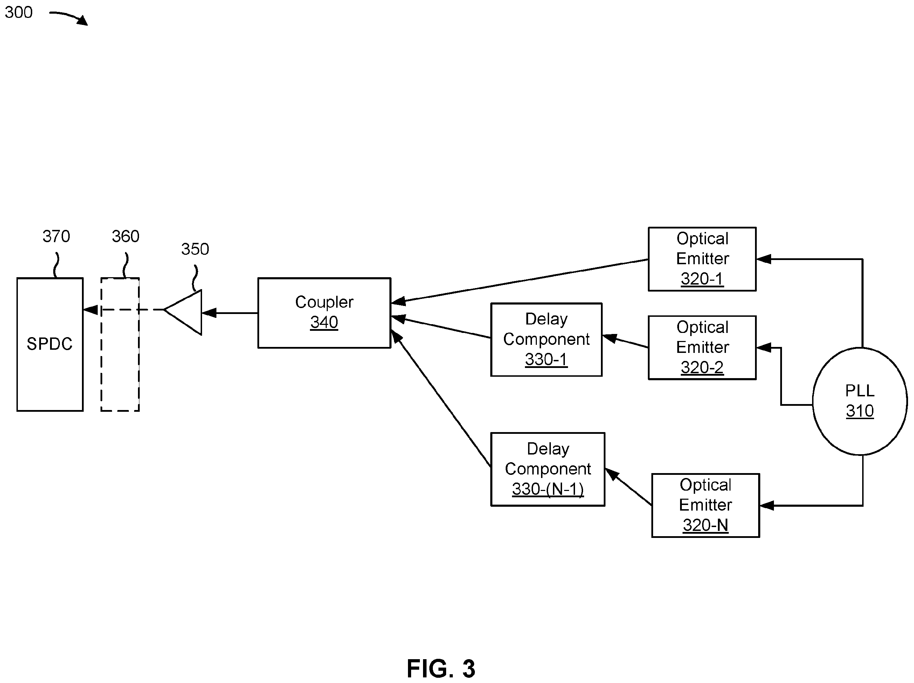

Fig. 3 is a diagram of an example optical system 300 associated with temporal multiplexing of entangled photon pair sources. As further shown in Fig. 3, the optical system 300 may include a phase-locked loop (PLL) 310, a set of optical emitters 320-1 through 320-*N*, a set of delay components 330-1 through 330-(*N-*1), a coupler 340, an amplifier 350, a frequency conversion component 360, and an SPDC photonic integrated circuit (PIC) 370.

The PLL 310 may control a timing of pulse emission by the set of optical emitters 320, such that each optical emitter 320 emits a concurrent pulse. The PLL 310 may include an optical PLL or an electrical PLL. The PLL 310 may deterministically turn the optical emitters 320 off and on to cause an output with a configured pulse pattern (e.g., in accordance with a control signal from a control element). Accordingly, when pulses, *p₂₁* and *p₂₂,* from the optical emitter 320-2 are received at the delay component 330-1, the delay component 330-1 delays the pulses relative to pulses *p₁₁* and *p₁₂* from the optical emitter 310-1. The coupler 340 combines the delayed pulses with the non-delayed pulses, and the coupler 340 outputs a four-pulse sequence of *p₁₁, p₂₁, p₁₂, p₂₂* in a time period in which the optical emitters 320 each outputted only two sequential pulses, as described above. Similarly, with respect to the optical emitter 320-*N* and the delay component 330-(*N-*1), the coupler 340 combines delayed pulses with the non-delayed pulses to output a sequence *p₁₁, p₂₁, ..., p_{N1}, p₁₂, p₂₂,* ..., *p_{N2}* during a period in which the optical emitters 320 each outputted only two sequential pulses, as described above.

The amplifier 350 may amplifier the pulse sequence to an energy level that is detectable at a detector of entangled photons, and the frequency conversion component 360 may perform a frequency conversion on the pulse sequence to achieve a configured frequency for the entangled photons. The SPDC PIC 370 may include a PIC that includes a non-linear optic or set of quantum dots configured to generate entangled photons from the pulse sequence. In this way, by using multiple optical emitters 320 as pulse sources, the optical system 300 may be resilient to failure of a pulse source (e.g., the SPDC PIC 370 can still output entangled photons even when some pulses are missing from a pulse sequence as a result of emitter failure or another failure). Additionally, or alternatively, the optical system 300 may include a feed-forward component to provide a clock output to a detector for high-time-resolution use cases. Alternatively, the clock output can be provided for large-time-window use cases to enable use as a low-pass phase noise filter.

As indicated above, Fig. 3 is provided as an example. Other examples may differ from what is described with regard to Fig. 3.

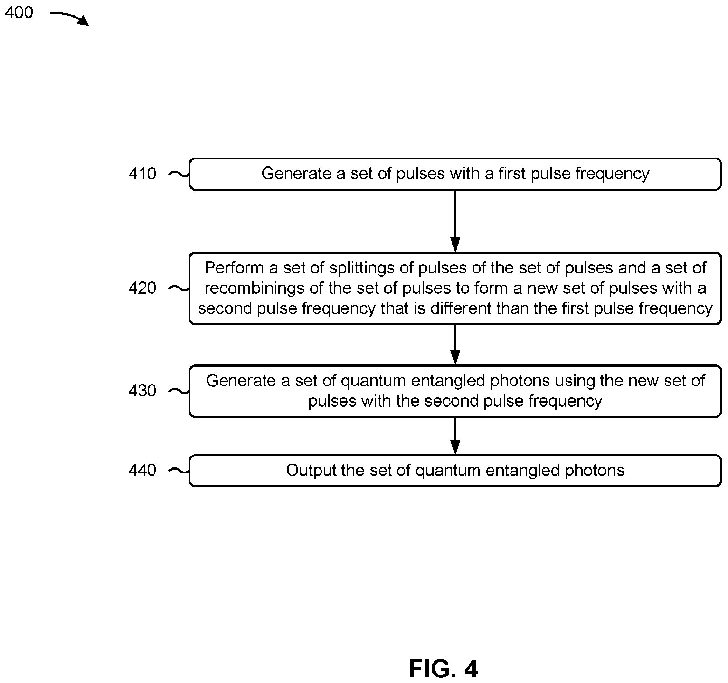

Fig. 4 is a flowchart of an example process 400 associated with temporal multiplexing of entangled photon pair sources. One or more process blocks of Fig. 4 are performed by an optical system (e.g., optical system 100, optical system 200, optical system 200', or optical system 300) and/or by another device or a group of devices separate from or including the optical system.

As shown in Fig. 4, process 400 includes generating a set of pulses with a first pulse frequency (block 410). For example, the optical system may generate a set of pulses with a first pulse frequency, as described above.

As further shown in Fig. 4, process 400 includes performing a set of splittings of pulses of the set of pulses and a set of re-combinings of the set of pulses to form a new set of pulses with a second pulse frequency that is different than the first pulse frequency (block 420). For example, the optical system may perform a set of splittings of pulses of the set of pulses and a set of re-combinings of the set of pulses to form a new set of pulses with a second pulse frequency that is different than the first pulse frequency, as described above.

As further shown in Fig. 4, process 400 includes generating a set of quantum entangled photons using the new set of pulses with the second pulse frequency (block 430). For example, the optical system may generate a set of quantum entangled photons using the new set of pulses with the second pulse frequency, as described above.

As further shown in Fig. 4, process 400 includes outputting the set of quantum entangled photons (block 440). For example, the optical system may output the set of quantum entangled photons, as described above.

Process 400 may include additional aspects, such as any single aspect or any combination of aspects described below and/or in connection with one or more other processes described elsewhere herein.

In a first aspect, performing the set of splittings of the set of pulses and the set of re-combinings of the set of pulses comprises splitting an input set of pulses into a first optical path and a second optical path, wherein the first optical path and the second optical path have different optical path lengths to introduce a delay between pulses on the first optical path and pulses on the second optical path, and re-combining the first optical path and the second optical path to form a re-combined set of pulses.

In a second aspect, alone or in combination with the first aspect, performing the set of splittings of the set of pulses and the set of re-combinings of the set of pulses comprises performing a plurality of splittings and a plurality of re-combinings.

In a third aspect, alone or in combination with one or more of the first and second aspects, the first pulse frequency is less than or equal to 100 megahertz and the second pulse frequency is at least 20 gigahertz.

In a fourth aspect, alone or in combination with one or more of the first through third aspects, the optical system includes a set of cascaded linear optics.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the implementations described herein to the precise forms that are described. Modifications and variations can be made in light of the above description or may be acquired from practice of the implementations described herein.

It will be apparent that systems and/or methods described herein can be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like. Even though particular combinations of features are recited in the claims and/or described in the specification, these combinations are not intended to limit the implementations described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item. When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

Further examples and combinations thereof include the followings.

Clause 1. An optical system (100; 200; 200'), comprising:
an optical emitter (110) configured to emit a beam with a first pulse frequency;
a set of splitters disposed in an optical path of the optical emitter (110);
a set of combiners (140-1, 140-2, 140-3, ..., 140-N) disposed in the optical path of the optical emitter (110),
   wherein a splitter, of the set of splitters, is configured to receive an input, at an input pulse frequency, and split the input into a first part and a second part,
   wherein the splitter includes a delay component (150-1, 150-2, 150-3, ..., 150-N), such that the second part is time-delayed relative to the first part at an output of the splitter;
   wherein a combiner of the set of combiners (140-1, 140-2, 140-3, ..., 140-N), is configured to receive the output of the splitter and re-combine the first part and the second part with the second part time-delayed relative to the first part, such that an output pulse frequency of the combiner is twice the input pulse frequency of the splitter; and
a spontaneous parametric down-conversion, SPDC, optic (130) configured to generate a set of quantum entangled photons from the beam, wherein the beam, at the SPDC optic (130), is associated with a second pulse frequency that is 2*^{N}* times greater than the first pulse frequency, where *N* represents a quantity of splitters in the set of splitters.

Clause 2. The optical system (100; 200; 200') of Clause 1, wherein the set of splitters is arranged linearly, such that each splitter, of the set of splitters, is associated with a time delay that is half of a time delay of a previous splitter of the set of splitters.

Clause 3. The optical system (100; 200; 200') of Clause 2, wherein a sequentially last splitter, of the set of splitters, is associated with a time delay of *T*/2^{N} where *T* represents a time delay of a sequentially first splitter of the set of splitters.

Clause 4. The optical system (100; 200; 200') of any one of the preceding Clauses, further comprising:
an amplifier (220) configured to amplify an output of at least one splitter of the set of splitters.

Clause 5. The optical system (100; 200; 200') of Clause 4, wherein the amplifier (220) includes an erbium-doped fiber array, EDFA, amplifier.

Clause 6. The optical system (100; 200; 200') of any one of the preceding Clauses, further comprising:
a frequency conversion component (230) configured to convert the beam from a first wavelength of the beam as an output from at least one splitter of the set of splitters to a second wavelength of the beam as an input to the SPDC optic (130).

Clause 7. The optical system (100; 200; 200') of any one of the preceding Clauses, further comprising:
a clock reference output (240) coupled to an output of a sequentially last splitter of the set of splitters.

Clause 8. The optical system (100; 200; 200') of any one of the preceding Clauses, wherein the splitter comprises:
a first splitter input (168-1) configured to receive the first part;
a second splitter input (168-2) configured to receive the second part;
a first splitter output (170-1) configured to output the first part;
a second splitter output (170-2) configured to output the second part;
a first set of optics (160, 162) configured to form a first splitter optical path (172-1) from the first splitter input (168-1) to the first splitter output (170-1); and
a second set of optics (160, 164, 166) configured to form a second splitter optical path (172-2) from the second splitter input (168-2) to the second splitter output (170-2). Clause 9. The optical system (100; 200; 200') of Clause 8, wherein the first splitter optical path (172-1) is associated with a first optical path length and the second splitter optical path (172-2) is associated with a second optical path length, wherein the time-delay of the second part is associated with a difference between the first optical path length and the second optical path length.

Clause 10. The optical system (100; 200; 200') of Clause 8 or Clause 9, wherein the first set of optics (160, 162) and the second set of optics (160, 164, 166) share at least one optical element.

Clause 11. The optical system (100; 200; 200') of Clause 10, wherein the at least one optical element includes at least one of:
a retro-reflector (162, 164);
a non-polarizing cube beam-combiner (160); or
a two-sided mirror (166).

Clause 12. The optical system (100; 200; 200') of any one of the preceding Clauses, further comprising:
at least one optical fiber (210) configured to couple the optical emitter (110) to the SPDC optic (130) via the set of splitters and the set of combiners (140-1, 140-2, 140-3, ..., 140-N).

Clause 13. The optical system (100; 200; 200') of Clause 12, wherein the optical fiber (210) is a dispersion compensating fiber.

Clause 14. A method (400), comprising:
generating, by an optical system, a set of pulses with a first pulse frequency (410);
performing, by the optical system, a set of splittings of pulses of the set of pulses and a set of re-combinings of the set of pulses to form a new set of pulses with a second pulse frequency that is different than the first pulse frequency (420);
generating, by the optical system, a set of quantum entangled photons using the new set of pulses with the second pulse frequency (430); and
outputting, by the optical system, the set of quantum entangled photons (440).

Clause 15. The method (400) of Clause 14, wherein performing the set of splittings of the set of pulses and the set of re-combinings of the set of pulses comprises:
splitting an input set of pulses into a first optical path and a second optical path, wherein the first optical path and the second optical path have different optical path lengths to introduce a delay between pulses on the first optical path and pulses on the second optical path; and
re-combining, by the optical system, the first optical path and the second optical path to form a re-combined set of pulses.

Clause 16. The method (400) of Clause 14 or Clause 15, wherein performing the set of splittings of the set of pulses and the set of re-combinings of the set of pulses comprises: performing a plurality of splittings and a plurality of re-combinings.

Clause 17. The method (400) of any one of Clauses 14 to 16, wherein the first pulse frequency is less than or equal to 100 megahertz and the second pulse frequency is at least 20 gigahertz.

Clause 18. The method (400) of any one of Clauses 14 to 17, wherein the optical system includes a set of cascaded linear optics.

Clause 19. An optical system (300), comprising:
a plurality of optical emitters (320-1, 320-2, ..., 320-N) configured to emit a plurality of sets of optical pulses each with a first pulse frequency;
a set of delay components (330-1, ..., 320-N) aligned to a subset of the plurality of optical emitters (320-1, 320-2, ..., 320-N), the delay components of the set of delay components (330-1, ..., 320-N) being configured to delay a subset of the plurality of sets of optical pulses;
a coupler component (340) configured to couple the plurality of sets of optical pulses, wherein the set of delay components (330-1, ..., 320-N) is configured to cause the plurality of sets of optical pulses to combine with a second pulse frequency; and
a spontaneous parametric down-conversion, SPDC (370) component configured to generate a set of quantum entangled photon pairs using the plurality of sets of optical pulses combined with the second pulse frequency.

Clause 20. The optical system (300) of Clause 19, further comprising:
a phase locked loop (310) configured to control the plurality of optical emitters (320-1, 320-2, ..., 320-N).

## Claims

1. An optical system (100; 200; 200'), comprising:
an optical emitter (110) configured to emit a beam with a first pulse frequency;
a set of splitters disposed in an optical path of the optical emitter (110);
a set of combiners (140-1, 140-2, 140-3, ..., 140-N) disposed in the optical path of the optical emitter (110),
wherein a splitter, of the set of splitters, is configured to receive an input, at an input pulse frequency, and split the input into a first part and a second part,
wherein the splitter includes a delay component (150-1, 150-2, 150-3, ..., 150-N), such that the second part is time-delayed relative to the first part at an output of the splitter;
wherein a combiner of the set of combiners (140-1, 140-2, 140-3, ..., 140-N), is configured to receive the output of the splitter and re-combine the first part and the second part with the second part time-delayed relative to the first part, such that an output pulse frequency of the combiner is twice the input pulse frequency of the splitter; and
a spontaneous parametric down-conversion, SPDC, optic (130) configured to generate a set of quantum entangled photons from the beam, wherein the beam, at the SPDC optic (130), is associated with a second pulse frequency that is 2*^{N}* times greater than the first pulse frequency, where N represents a quantity of splitters in the set of splitters.

2. The optical system (100; 200; 200') of claim 1, wherein the set of splitters is arranged linearly, such that each splitter, of the set of splitters, is associated with a time delay that is half of a time delay of a previous splitter of the set of splitters.

3. The optical system (100; 200; 200') of claim 2, wherein a sequentially last splitter, of the set of splitters, is associated with a time delay of *T*/2^{N} where *T* represents a time delay of a sequentially first splitter of the set of splitters.

4. The optical system (100; 200; 200') of any one of the preceding claims, further comprising:
an amplifier (220) configured to amplify an output of at least one splitter of the set of splitters.

5. The optical system (100; 200; 200') of claim 4, wherein the amplifier (220) includes an erbium-doped fiber array, EDFA, amplifier.

6. The optical system (100; 200; 200') of any one of the preceding claims, further comprising:
a frequency conversion component (230) configured to convert the beam from a first wavelength of the beam as an output from at least one splitter of the set of splitters to a second wavelength of the beam as an input to the SPDC optic (130).

7. The optical system (100; 200; 200') of any one of the preceding claims, further comprising:
a clock reference output (240) coupled to an output of a sequentially last splitter of the set of splitters.

8. The optical system (100; 200; 200') of any one of the preceding claims, wherein the splitter comprises:
a first splitter input (168-1) configured to receive the first part;
a second splitter input (168-2) configured to receive the second part;
a first splitter output (170-1) configured to output the first part;
a second splitter output (170-2) configured to output the second part;
a first set of optics (160, 162) configured to form a first splitter optical path (172-1) from the first splitter input (168-1) to the first splitter output (170-1); and
a second set of optics (160, 164, 166) configured to form a second splitter optical path (172-2) from the second splitter input (168-2) to the second splitter output (170-2).

9. The optical system (100; 200; 200') of claim 8, wherein the first splitter optical path (172-1) is associated with a first optical path length and the second splitter optical path (172-2) is associated with a second optical path length, wherein the time-delay of the second part is associated with a difference between the first optical path length and the second optical path length.

10. The optical system (100; 200; 200') of claim 8 or 9, wherein the first set of optics (160, 162) and the second set of optics (160, 164, 166) share at least one optical element, said at least one optical element including at least one of a retro-reflector (162, 164), a non-polarizing cube beam-combiner (160), or a two-sided mirror (166).

11. The optical system (100; 200; 200') of any one of the preceding claims, further comprising:
at least one optical fiber (210) configured to couple the optical emitter (110) to the SPDC optic (130) via the set of splitters and the set of combiners (140-1, 140-2, 140-3, ..., 140-N).

12. The optical system (100; 200; 200') of claim 12, wherein the optical fiber (210) is a dispersion compensating fiber.

13. A method (400), comprising:
generating, by an optical system, a set of pulses with a first pulse frequency (410);
performing, by the optical system, a set of splittings of pulses of the set of pulses and a set of re-combinings of the set of pulses to form a new set of pulses with a second pulse frequency that is different than the first pulse frequency (420);
generating, by the optical system, a set of quantum entangled photons using the new set of pulses with the second pulse frequency (430); and
outputting, by the optical system, the set of quantum entangled photons (440).

14. The method (400) of claim 14, wherein performing the set of splittings of the set of pulses and the set of re-combinings of the set of pulses comprises:
splitting an input set of pulses into a first optical path and a second optical path, wherein the first optical path and the second optical path have different optical path lengths to introduce a delay between pulses on the first optical path and pulses on the second optical path; and
re-combining, by the optical system, the first optical path and the second optical path to form a re-combined set of pulses.

15. The method (400) of claim 14 or 15, wherein performing the set of splittings of the set of pulses and the set of re-combinings of the set of pulses comprises:
performing a plurality of splittings and a plurality of re-combinings.
